# EUROPEAN PATENT SPECIFICATION

(11) **EP 1 250 565 B1**
(45) Date of publication and mention of the grant of the patent: **19.05.2004**
(21) Application number: 01900486.0
(22) Date of filing: 08.01.2001
(51) Int. Cl.: G01C 19/56, G01P 9/04

(54) **ANGULAR RATE SENSOR**
DREHGESCHWINDIGKEITSSENSOR
DETECTEUR DE VITESSE ANGULAIRE

(30) Priority: 27.01.2000 GB 0001775
(43) Date of publication of application: 23.10.2002
(73) Proprietor: BAE SYSTEMS plc, Farnborough, Hampshire GU14 6YU (GB)
(72) Inventor: FELL, Christopher Paul, Devon PL6 7QE (GB)
(74) Representative: Rooney, Paul Blaise
(86) International application number: PCT/GB2001/000055
(87) International publication number: WO 2001/055675

(56) References cited:
- EP-A- 0 786 645
- EP-A- 0 836 073
- US-A- 5 723 790

## Description

The present invention concerns improvements relating to angular rate sensor devices, and more particularly, though not exclusively, to angular rate sensor devices employing a sensor having a planar structure vibrating resonator, such as that used in micro-machined Vibrating Structure Gyroscopes (VSGs), and associated control electronics.

Micro-machined Vibrating Structure Gyroscopes, namely VSGs formed in a single crystal silicon substrate using lithographic techniques, provide a source of compact, low-cost rate sensors which can be supplied in large quantities. This affordability has generated new high-volume markets particularly in automotive application areas. There are currently numerous devices under development employing a variety of sensor-chip designs fabricated using different materials and processes. The complete device consists of the sensor chip and associated control electronics in appropriate packaging. For high-volume applications the control electronics will typically be implemented as a discrete ASIC (Application Specific Integrated Circuit).

In this intensely competitive market there is inevitably a continual drive towards lower cost and improved performance. One of the perceived routes towards these goals is through integration of the electronics directly onto the sensor chip. It is considered that integration of the control circuitry could provide significant performance benefits particularly for devices employing capacitive sensing. For example, locating the pick-off amplifier circuitry close to the sense electrode is beneficial for minimisation of parasitic coupling from stray drive voltages and for reducing stray capacitances. In addition, fabricating the control electronics directly on the sensor chip may also reduce the overall device component count by negating the requirement for a separate ASIC or discrete electronics. This can advantageously reduce the overall device size and potentially reduce the unit cost.

The feasibility of on-chip electronics integration is critically dependent upon the sensor design and fabrication method. Fabrication of the electronics and sensor on the same piece of Silicon requires that the processes for producing these two elements are mutually compatible. This is not always readily achieved without significant modification to one or other of the process routes, which may have a detrimental affect on the overall wafer yield. Some compromise in the-device design may also be required to accommodate these changes which also typically has an adverse effect on performance.

These problems have mitigated against the commercial development of such on-chip electronic integrated planar resonator devices fabricated from silicon and at present such devices are not available commercially. A detailed explanation of why such difficulties in integration exist is now provided with reference to a prior art sensor described in our copending patent application EP-A-1 105 694.

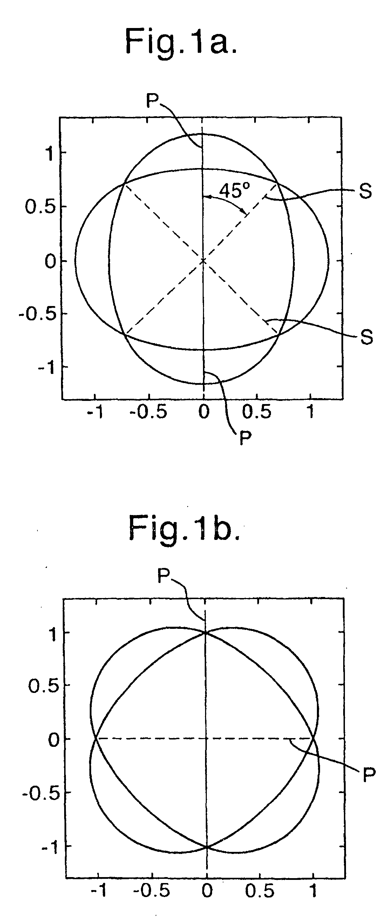

Sensors employing planar ring structures, such as that described in EP-A-1 105 694, typically use the Cos2θ and Sin2θ vibration mode pair as shown in Figures 1a and 1b in which vibration of the structure is shown about primary axes P and secondary axes S. One of these modes (Figure 1a) is excited as the carrier mode. When the structure is rotated about an axis normal to the plane of the ring Coriolis forces couple energy into the response mode (Figure 1b). If the carrier and response mode frequencies are precisely matched then the amplitude of the response mode motion is amplified by the Q of the structure. This gives an enhanced sensitivity and such devices are capable of high performance.

One of the critical parameters determining the device performance is the difference frequency between the two modes and its stability over the operating temperature range. In order to achieve this frequency matching it is essential that the material properties are such that the resonance parameters for the two modes are precisely matched. When fabricating such resonator structures from crystalline Silicon, it is presently understood that this requirement can only be met by using [111] Silicon wafers, namely Silicon wafers cut parallel to the [111] principal crystal plane. For this crystal orientation the critical material parameters are radially isotropic. However, this requirement is not compatible with the fabrication of standard electronic circuitry on the device layer Silicon. Standard CMOS/BiCMOS fabrication is typically performed on [100] Silicon wafer substrates. The techniques and processes employed at commercial foundries are not directly applicable to [111] cut Silicon wafers.

Accordingly, it is an object of the present invention to overcome the above described problems that have to now mitigated against the commercial development of improved sensor devices fabricated from crystalline silicon and incorporating electronic circuitry intergrated onto the sensor chip.

A linear, non-ring structure semi conductor device is described in US-A-5723790 for measuring force components, acceleration and/or angular rate, which is formed from a single crystal semi conductor substrate such as [100] orientated silicon. One or more cantilever beams, each carrying an inertial mass, are formed from the semi-conductor substrate, angled to the substrate surface and orientated in the [111] crystal plane for proportionate movement in response to applied force.

A rate sensor having a ring shaped vibrating structure formed from crystalline silicon which is vibrated in a Cos2θ carrier mode at a Cos2θ frequency is described in EP-A-0836073.

In its broadest aspect, the present invention resides in the appreciation that a sensor comprising a resonator can be fabricated from [100] crystalline Silicon thereby enabling integration of the sensor and associated control electronics. The inventor has established that if the resonator is arranged and operated in a specific way, as determined by specific analysis of possible vibration modes, it can operate in a similar manner as if it were formed in [111] crystalline Silicon.

More specifically, according to the present invention there is provided an angular rate sensor device comprising a resonator having a substantially planar structure drive means, sensing means and associated electronic control means, the resonator, drive means, sensing means and control means being fabricated on the same sensor chip in a layer of silicon having a [100] principal crystal plane, wherein the resonator is arranged to be operated by the control means with a Sin3θ/Cos3θ vibration mode pair providing degenerate carrier and response parameters.

Use of the present invention now enables all of the abovementioned previously unavailable advantages associated with integrating control electronics and the sensor chip itself to be attained. The Sin3θ/Cos3θ vibration mode pair providing degenerate carrier and response parameters is most suitable for providing a device incorporating a micro-machined VSG.

The substantially planar ring resonator structure has been found to be a high performance structure in relation to its weight for micro-machined VSGs.

Support means may be included for the resonator, which support means comprises a plurality of flexible support legs which allow relative movement of the planar ring structure resonator in the sensor device. More specifically, the resonator may be provided within a cavity in a substrate, spaced apart from the substrate and suspended in the cavity by the support legs being provided from a central hub to the planar ring structure resonator.

The number and location of the support legs are preferably matched to a mode symmetry of vibration mode pair. This advantageously, prevents any preturbation of the dynamics of the vibration mode pair thereby preventing any frequency split.

The electronic control means preferably comprises drive circuitry for use with the drive means and sensing circuitry for use with the sensing means but may also include all additional circuitry that would otherwise be provided on a separate ASIC (Application Specific Integrated Circuit) or discrete electronics. The drive and sensing circuitry may be provided around the periphery of the resonator, in close proximity to the respective drive means and sensing means. Again this is another high performance structural configuration for a micro-machined VSG. This advantageously minimises any stray parasitic capacitance effects on the drive means and/or the sensing means.

Preferably, the sensing circuitry comprises an electronic amplifier for amplifying the size of sensed signals. Providing the amplifier in the layer of Silicon again provides a high performance structural configuration for a micro-machined VSG.

The device may further comprise an electrical screening means provided at least between each of the drive and sensing means, the screening means being electrically grounded to electrically screen the drive and sensing means from each other. This advantageously, enables the construction of the devices to be more compact without affecting the performance of the device.

The present invention also extends to a silicon wafer comprising a plurality of angular rate devices as described above.

The present invention enables a planar-ring rate sensor to be provided, fabricated from [100] cut crystalline Silicon, with carrier and response mode resonance parameters precisely matched and which is capable of high performance. An explanation of why the present invention enables such integrated electronics and sensor devices to be fabricated is now described.

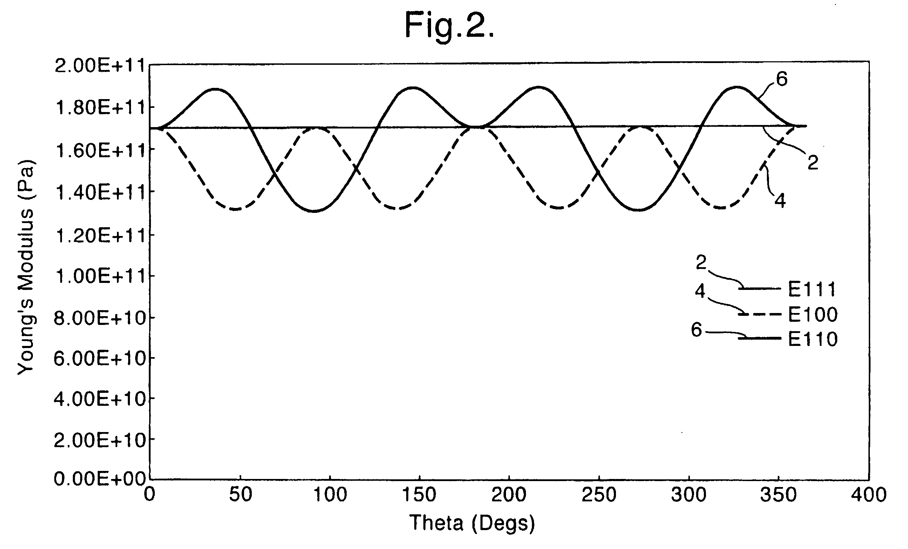

Crystalline Silicon has material properties that are well suited for use in vibrating structure gyroscope applications. Being a single crystal material it has low fatigue and is extremely strong. This makes it durable and resilient and very robust when subjected to shock and vibration. More specifically, it has low internal losses (high Quality factor) and a high Young's modulus, E. These parameters are also relatively stable over the operating temperature range of the device. However, they do exhibit a pronounced anisotropy which means that they will generally vary with angular direction. This angular dependence is shown in Figure 2 which plots the variation in Young's modulus with angular direction for the three principal crystal planes [111, 100 and 110] shown by lines 2, 4 and 6 respectively. It is clear that Young's modulus value for the [111] plane is independent of angle which makes it ideally suited for use with planar ring devices employing Sin2θ/Cos2θ resonance modes such as described in EP-A-1 105 694. The periodicity of the angular variation for the other crystal planes is such that a large frequency split is induced between the two modes making them inappropriate for gyroscope operation.

The natural frequencies of the Sin *n*θ/Cos *n*θ in plane flexural mode pairs has been analysed using Lagrange's equations. The effects of the anisotropy may be accounted for in the strain energy formulation. The isotropic nature of the E variation for the [111] plane will clearly not generate a frequency split for any mode order, *n*. For the [100] plane, the Sin *n*θ/Cos *n*θ modes are split for *n*=2 and 4 but the *n*=3 modes are degenerate. (Mode orders above *n*=4 are generally less suitable for gyroscope applications due to their reduced amplitude and high frequency). It is therefore possible to fabricate a planar ring structure from [100] Silicon which has the required material properties to match the modal parameters by utilising the Sin3θ/Cos3θ mode pair.

Presently preferred embodiments of the present invention will now be described with reference to the accompanying drawings. In the drawings:
Figures 1a and 1b are respective schematic representations of the vibration patterns of a Cos 2θ and Sin 2θ vibration mode pair representing a carrier mode and a response mode;
Figure 2 is a graph showing the in plane angular variation of Young's Modulus for each of the three principal crystal planes [111, 100, 110] for crystalline Silicon;
Figure 3a and 3b are respective schematic representations of the vibration patterns of a Sin 3θ and Cos 3θ vibration mode pair representing a carrier mode and a response mode according to an embodiment of the present invention;
Figure 4 is a schematic plan view from above of part of an angular rate sensor according to an embodiment of the present invention showing a resonator, a support structure and drive and pick-off transducers; and
Figure 5 is a schematic cross-sectional view taken along the line AA in Figure 4.

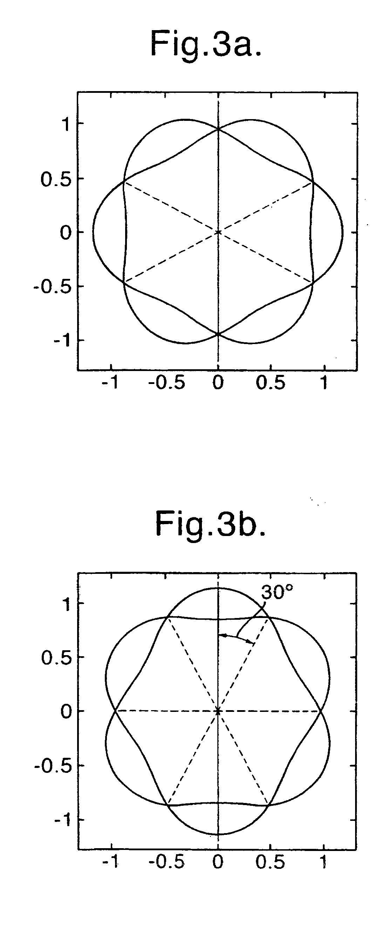

An angular rate sensor device embodying the present invention is now described with reference to Figures 3a, 3b, 4 and 5. The sensor device 10 comprises a micro-machined vibrating structure gyroscope and is arranged to operate with a Sin 3θ and Cos 3θ vibration mode pair as has been described previously. More specifically, the Cos3θ carrier and Sin3θ response mode patterns are shown in Figures 3a and 3b.

The device 10 utilising these modes incorporates electrostatic drive transducers and capacitive forcing transducers similar to those described in EP-A-1 105 694. The fabrication processes used to produce this structure are essentially the same as those described in EP-A-1 105 694 and, accordingly, are not described hereinafter in any further detail.

The device 10 is formed from a layer 12 of [100] conductive Silicon anodically bonded to a glass substrate 14. The main components of the device 10 are a ring structure resonator 16, six drive capacitor transducers 18 and six pick-off capacitive transducers 20. The resonator 16 and drive and pick-off capacitive transducers 18, 20 are formed by a process of Deep Reactive Ion Etching (DRIE) which forms trenches through the Silicon layer 12. The fabrication processes are fully compatible with the fabrication of micro-electronics (not shown) directly on the Silicon device layer 12. The techniques involved in such fabrication are well known and are not described herein.

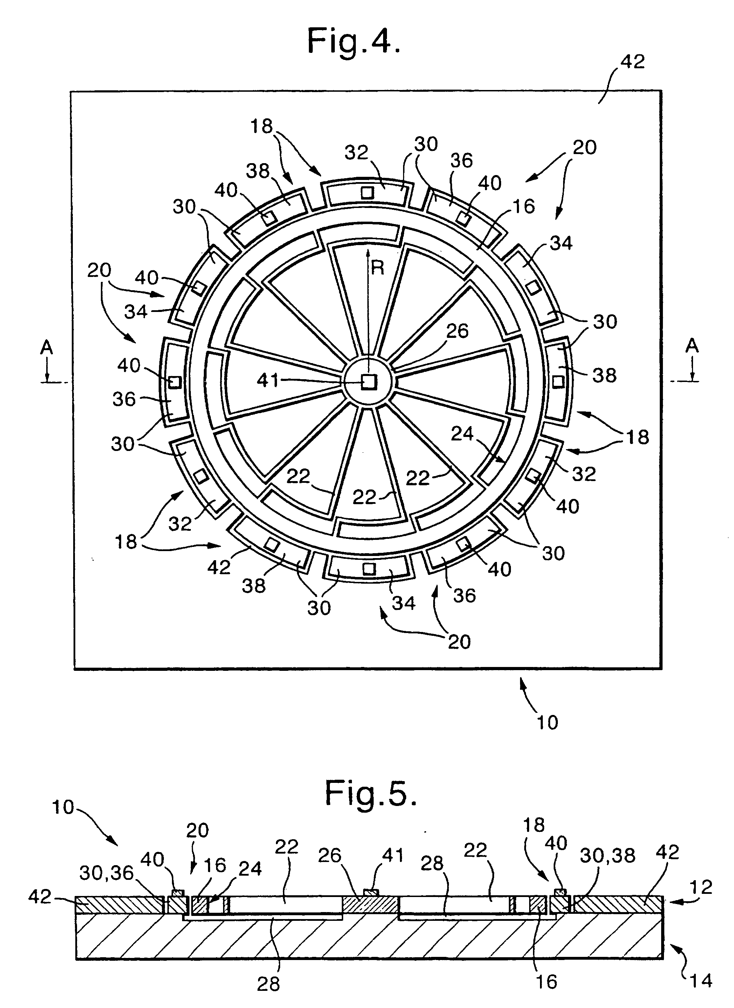

Figure 4 is a schematic diagram, in plan view, showing the design of the device 10 and Figure 5 shows a schematic cross-sectional view across the structure of the device 10. The ring structure resonator 16 is supported centrally by means of compliant legs 22. The legs 22 have the effect of spring masses acting on the ring structure resonator 16 at the point of attachment. A single support leg 22 in isolation will differentially perturb the dynamics of the Sin3θ and Cos3θ modes generating a frequency split. In order to ensure that the net effect of the support legs 22 does not induce any splitting, the number and location of the support legs 22 are typically matched to the mode symmetry. Conveniently, twelve identical leg supports 12 are provided at regular angular intervals of 30°. These are attached at one end to the inside 24 of the ring structure resonator 16 and at the other end to a central support hub 26. The hub 26 is in turn rigidly attached to the insulating glass substrate 14. A cavity 28 is provided in the glass substrate 14 under the rim of the ring structure resonator 16 and compliant leg structures 22 to allow free movement of the ring structure resonator 16.

Twelve discrete curved plates 30 are provided around the outer circumference of the ring structure resonator rim such that each forms a capacitor between the surface of a plate 30 facing the ring structure resonator 16 and the outer circumferential surface of the ring structure resonator itself. The plates 30 are rigidly fixed to the glass substrate 14 and are electrically isolated from the ring structure resonator 16. The plates 30 are located at regular angular intervals of 30° around the rim of the ring structure resonator 16 and each subtends an angle of 25°. Conveniently, three of the plates 30, located at 0°, 120° and 240° to a fixed reference axis R, are used as carrier drive elements 32. The carrier mode motion is detected using the plates 30 at 60°, 180° and 300° to the fixed reference axis R, as pick-off transducers 34. Under rotation Coriolis forces will couple energy into the response mode. This motion is detected by response mode pick-off transducers 36 located at 30°, 150° and 270° to the fixed reference axis R. To allow the device 10 to operate in a force feedback mode response mode, drive elements 38 are located at 90°, 210° and 330° to the fixed reference axis R. Electrical bond pads 40 are provided on each drive and pick-off transducer 18, 20 to allow for connection to control circuitry (not shown).

In operation a drive voltage is applied to the carrier drive elements 32 at the resonant frequency. The ring structure resonator 16 is maintained at a fixed offset voltage which results in a developed force which is linear with the applied voltage for small capacitor gap displacements. Electrical connection to the ring structure resonator 16 is made by means of a bond pad 41 provided on the central hub 26 which connects through the conductive silicon of the legs 22 to the ring structure resonator 16. The induced motion causes a variation in the capacitor gap separation of the carrier mode pick-off transducers 34. This will generate a current across the gap which may be amplified to give a signal proportional to the motion. The rotation induced motion at the response mode pick-off transducers 36 is similarly detected. In force feedback mode, a drive voltage is applied to the response mode drive transducers 38 to null this motion with the applied drive voltage being directly proportional to the rotation rate. Direct capacitive coupling of the drive signals onto the pick-off transducers 20, 34, 36 can give rise to spurious signal outputs which will appear as a bias output and degrade the device performance. In order to minimise this error, a screen layer 42 is provided which surrounds the capacitor plates 30 on all sides except that facing the ring structure resonator 16. This screen 42 is connected to a ground potential which enables the drive and pick-off transducers 18, 20 to be in close proximity to one another.

To reduce the effect of stray capacitance and parasitic coupling, pick-off amplifiers (not shown) providing sensing circuitry are advantageously provided in close proximity to the discrete pick-off capacitor plates 20, 34, 36. The appropriate sensing circuitry may be fabricated on the Silicon screen layer 12 directly adjacent to the individual sensing plates 20, 34, 36 with electrical connections to the sensing plates made by means of wire bonds (not shown) to the bond pads 40 formed on the upper surface of the sensing plates 20, 34, 36.

The fabrication of the amplifier circuitry (not shown) will require the device wafer, in which a plurality of devices 10 are being formed, to be subjected to the large number of additional process steps. It is therefore advantageous to fabricate as much of the electronic circuitry as possible on the device chip to reduce the requirement for additional external circuitry. This may advantageously include all additional electronic control circuitry including drive circuitry (not shown) for generating required drive voltages and the offset voltage applied to the ring resonator 16. In this case, the drive circuitry would be fabricated on the Silicon screen layer in close proximity to the discrete drive element plates 18, 32, 38 and would be electrically connected to individual drive plates 18, 32, 38 by wire bonds (not shown) to the bond pads 40 formed on the upper surface of the drive plates 18, 32, 38.

Having described particular preferred embodiments of the present invention, it is to be appreciated that the embodiments in question are exemplary only and that variations and modifications such as will occur to those possessed of the appropriate knowledge and skills may be made without departure from the scope of the invention as set forth in the appended claims.

## Claims

1. An angular rate sensor device comprising a resonator (16), having a substantially planar ring structure drive means (18), sensing means (20) and associated electronic control means, the resonator (16), drive means (18), sensing means (20) and control means being fabricated on the same sensor chip in a layer of silicon having a [100] principal crystal plane (12), wherein the resonator (16) is arranged to be operated by the control means with a Sin3θ/Cos3θ vibration mode pair providing degenerate carrier and response parameters.

2. An angular rate sensor device as claimed in Claim 1, including support means for the resonator (16) which support means comprises a plurality of flexible support legs (22).

3. An angular rate sensor device as claimed in Claim 2, wherein the number and location of the support legs (22) are matched to a mode symmetry of vibration mode pair.

4. An angular rate sensor device as claimed in Claim 2 or Claim 3, wherein the resonator (16) is provided within a cavity (28) spaced apart from a substrate (14) and suspended in the cavity (28) by the support legs (22) provided from a central hub (26) to the planar ring structure resonator (16).

5. An angular rate sensor device as claimed in any preceding Claim, wherein the electronic control means comprises drive circuitry for use with the drive means (18) and sensing circuitry for use with the sensing means (20).

6. An angular rate sensor device as claimed in Claim 5, wherein the drive circuitry and the sensing circuitry are each provided in close proximity to the respective drive means (18) and sensing means (20) around the periphery of the resonator (16).

7. An angular rate sensor device as claimed in Claim 5 or Claim 6, wherein the sensing circuitry comprises an amplifier for amplifying the size of sensed signals.

8. An angular rate sensor device as claimed in any preceding claim, wherein the drive means comprises three carrier-mode drive elements (32) provided at 0°, 120°, 240° to a fixed reference axis (R) and the sensing means comprises three carrier-mode sensing elements (34) provided at 60°,180°, 300° to the fixed reference axis (R).

9. An angular rate sensor device as claimed in Claim 8, wherein the drive means comprises three response-mode drive elements (38) provided at 90°, 210°, 330° to the fixed reference axis (R) and the sensing means comprises three response-mode sensing elements (36) provided at 30°, 150°, 270° to the fixed reference axis (R).

10. An angular rate sensor device as claimed in any preceding claim, further comprising an electrical screening means (42) provided at least between each of the drive and sensing means (18, 20), the screening means (42) being electrically grounded to electrically screen the drive and sensing means (18, 20) from each other.

11. An angular rate sensor device as claimed in any preceding claim, further comprising a base substrate (14) made from an electrically insulating material such as glass.

12. An angular rate sensor device as claimed in any preceding claim, wherein the Sin 3θ/Cos 3θ vibration mode pair has modal parameters which include the Young's Modulus of the crystalline silicon for the vibration mode pair.

13. An angular rate sensor device as claimed in any preceding claim, wherein the resonator (16) comprises a micro-machined vibrating structure gyroscope.

14. A silicon wafer comprising a plurality of angular rate devices as claimed in any preceding claim.

## Patentansprüche

1. Winkelgeschwindigkeitssensor-Gerät mit einem Resonator (16), der im Wesentlichen planare Ringsstruktur-Treibermittel (18) sowie Sensormittel (20) und zugeordnete elektronische Steuermittel aufweist, wobei der Resonator (16), die Treibermittel (18) und die Sensormittel (20) und die Steuermittel auf dem gleichen Sensorchip in einer Schicht aus Silizium hergestellt sind, die eine Haupt-[100]-Kristallebene (12) hat und wobei der Resonator (16) durch die Steuermittel mit Sin3θ/Cos3θ-Vibrationsmodenpaaren erregt wird, die eine Degenerierung von Täger- und Ansprechparametem bewirken.

2. Winkelgeschwindigkeitssensor-Gerät nach Anspruch 1 mit Trägermitteln für den Resonator (16), wobei die Trägermittel aus mehreren flexiblen Tragarmen (22) bestehen.

3. Winkelgeschwindigkeitssensor-Gerät nach Anspruch 2, bei welchem die Zahl und Anordnung der Tragarme (22) einer Modensymmetrie des Vibrationsmodenpaares angepasst ist.

4. Winkelgeschwindigkeitssensor-Gerät nach den Ansprüchen 2 oder 3, bei welchem der Resonator (16) einen Hohlraum (28) aufweist, der vom Substrat (14) distanziert ist und im Hohlraum (28) durch die Tragarme (22) aufgehängt ist, die von einer zentralen Nabe (26) nach dem planaren Ringstrukturresonator (16) verlaufen.

5. Winkelgeschwindigkeitssensor-Gerät nach einem der vorhergehenden Ansprüche, bei welchem die elektronischen Steuermittel eine Treiberschaltung zur Benutzung mit den Treibermitteln (18) und eine Sensorschaltung zur Benutzung mit den Sensormitteln (20) umfassen.

6. Winkelgeschwindigkeitssensor-Gerät nach Anspruch 5, bei welchem die Treiberschaltung und die Sensorschaltung jeweils dicht benachbart zu den jeweiligen Treibermitteln (18) und Sensormitteln (20) über den Umfang des Resonators (16) angeordnet sind.

7. Winkelgeschwindigkeitssensor-Gerät nach den Ansprüchen 5 oder 6, bei welchem die Sensorschaltung einen Verstärker enthält, um die Größe der erfassten Signale zu verstärken.

8. Winkelgeschwindigkeitssensor-Gerät nach einem der vorhergehenden Ansprüche, bei welchem die Treibermittel drei Trägermodus-Treiberelemente (32) aufweisen, die bei 0°, 120°, 240° gegenüber einer festen Bezugsachse (R) angeordnet sind und dass die Sensormittel drei Trägermodus-Sensorelemente (34) aufweisen, die unter 60°, 180° und 300° gegenüber der festen Bezugsachse (R) angeordnet sind.

9. Winkelgeschwindigkeitssensor-Gerät nach Anspruch 8, bei welchem die Treibermittel drei Ansprechmodus-Treiberefemente (38) umfassen, die bei 90°, 210°, 330° gegenüber der festen Bezugsachse (R) angeordnet sind und die Sensormittel drei Ansprechmodus-Sensorelemente (36) aufweisen, die bei 30°, 150° und 270° gegenüber der festen Bezugsachse (R) angeordnet sind.

10. Winkelgeschwindigkeitssensor-Gerät nach einem der vorhergehenden Ansprüche, welches außerdem eine elektrische Abschirmung (42) aufweist, die wenigstens zwischen jedem Treibermittel und Sensormittel (18, 20) vorgesehen ist, wobei die Abschirmung (42) elektrisch geerdet ist, um elektrisch die Treibermittel und die Sensormittel (18, 20) voneinander abzuschirmen.

11. Winkelgeschwindigkeitssensor-Gerät nach einem der vorhergehenden Ansprüche, welches außerdem ein Basissubstrat (14) aufweist, das aus einem elektrisch isolierenden Material, beispielsweise aus Glas, besteht.

12. Winkelgeschwindigkeitssensor-Gerät nach einem der vorhergehenden Ansprüche, bei welchem das Sin3θ/Cos3θ-Vibrationsmodenpaar modale Parameter aufweist, die das Elastizitätsmodul des kristallinen Silizium für das Vibrationsmodenpaar umfassen.

13. Winkelgeschwindigkeitssensor-Gerät nach einem der vorhergehenden Ansprüche, bei welchem der Resonator (16) ein mikrobearbeitetes Vibrationsstrukturgyroskop ist.

14. Siliziumwafer mit mehreren Winkelgeschwindigkeits-Geräten nach einem der vorhergehenden Ansprüche.

## Revendications

1. Un dispositif capteur de vitesse angulaire comportant un résonateur (16), ayant un moyen d'entraînement (18) à structure en anneau substantiellement plan, un moyen de captage (20) et un moyen de commande électronique associé, le résonateur (16), le moyen d'entraînement (18), le moyen de captage (20) et le moyen de commande étant fabriqués sur la même puce de capteur dans une couche de silicium ayant un plan cristallin principal [100] (12), dans lequel le résonateur (16) est agencé pour être actionné par le moyen de commande avec une paire de modes vibration Sin3θ/Cos3θ fournissant des paramètres porteur et de réponse dégénérés.

2. Un dispositif capteur de vitesse angulaire tel que revendiqué dans la revendication 1, comprenant un moyen de support destiné au résonateur (16), lequel moyen de support comporte une pluralité de pattes support flexibles (22).

3. Un dispositif capteur de vitesse angulaire tel que revendiqué dans la revendication 2, dans lequel le nombre et l'emplacement des pattes support (22) sont adaptés à un mode en symétrie de la paire de modes vibration.

4. Un dispositif capteur de vitesse angulaire tel que revendiqué dans la revendication 2 ou la revendication 3, dans lequel le résonateur (16) est prévu au sein d'une cavité (28) à l'écart d'un substrat (14) et suspendu dans la cavité (28) par les pattes support (22) fournies d'un moyeu central (26) au résonateur à structure en anneau plan (16).

5. Un dispositif capteur de vitesse angulaire tel que revendiqué dans n'importe quelle revendication précédente, dans lequel le moyen de commande électronique comporte une circuiterie d'entraînement destinée à être utilisée avec le moyen d'entraînement (18) et une circuiterie de captage destinée à être utilisée avec le moyen de captage (20).

6. Un dispositif capteur de vitesse angulaire tel que revendiqué dans la revendication 5, dans lequel la circuiterie d'entraînement et la circuiterie de captage sont chacune prévues à proximité étroite du moyen d'entraînement (18) et du moyen de captage (20) respectifs autour de la périphérie du résonateur (16).

7. Un dispositif capteur de vitesse angulaire tel que revendiqué dans la revendication 5 ou la revendication 6, dans lequel la circuiterie de captage comporte un amplificateur destiné à amplifier la taille de signaux captés.

8. Un dispositif capteur de vitesse angulaire tel que revendiqué dans n'importe quelle revendication précédente, dans lequel le moyen d'entraînement comporte trois éléments d'entraînement en mode porteur (32) prévus à 0°, 120°, 240° par rapport à un axe de référence fixe (R) et le moyen de captage comporte trois éléments de captage en mode porteur (34) prévus à 60°, 180°, 300° par rapport à l'axe de référence fixe (R).

9. Un dispositif capteur de vitesse angulaire tel que revendiqué dans la revendication 8, dans lequel le moyen d'entraînement comporte trois éléments d'entraînement en mode réponse (38) prévus à 90°, 210°, 330° par rapport à l'axe de référence fixe (R) et le moyen de captage comporte trois éléments de captage en mode réponse (36) prévus à 30°, 150°, 270° par rapport à l'axe de référence fixe (R).

10. Un dispositif capteur de vitesse angulaire tel que revendiqué dans n'importe quelle revendication précédente, comportant de plus un moyen écran électrique (42) prévu au moins entre chacun des moyens d'entraînement et de captage (18, 20), le moyen écran (42) étant électriquement mis à la terre pour protéger électriquement par écran les moyens d'entraînement et de captage (18, 20) l'un de l'autre.

11. Un dispositif capteur de vitesse angulaire tel que revendiqué dans n'importe quelle revendication précédente, comportant de plus un substrat de base (14) réalisé à partir d'un matériau électriquement isolant tel que du verre.

12. Un dispositif capteur de vitesse angulaire tel que revendiqué dans n'importe quelle revendication précédente, dans lequel la paire de modes vibration Sin 3θ/Cos 3θ a des paramètres modaux qui comprennent le module de Young du silicium cristallin pour la paire de modes vibration.

13. Un dispositif capteur de vitesse angulaire tel que revendiqué dans n'importe quelle revendication précédente, dans lequel le résonateur (16) comporte un gyroscope à structure vibrante micro-usiné.

14. Une plaquette de silicium comportant une pluralité de dispositifs de vitesse angulaire tel que revendiqué dans n'importe quelle revendication précédente.
